# DEMANDE DE BREVET EUROPEEN

(11) **EP 0 624 017 A1**
(43) Date de publication de la demande: **09.11.1994**
(21) Numéro de dépôt: 94400954.7
(22) Date de dépôt: 03.05.1994
(51) Int. Cl.: H04L 12/56

(54) **Réseau de télécommunications par paquets**

(30) Priorité: 04.05.1993 FR 9305289
(71) Demandeur: THOMSON-CSF, 75008 Paris (FR)
(72) Inventeur: Lagoutte, Pierre, F-92402 Courbevoie Cedex (FR); Blanchard, Alain, F-92402 Courbevoie Cedex (FR)
(74) Mandataire: Lincot, Georges

(57) **Abrégé**

Le réseau comprend un plan de transport (2) composé de micronoeuds de commutation (6) reliés entre eux par des artères. Le plan de transport (2) est adapté pour permettre la communication et l'acheminement de paquets ou cellules de données entre équipements (4) du réseau et avec d'autres équipements extérieurs au réseau. Chaque micronoeud (6) est commandé à partir d'instructions comprises dans chaque en-tête de cellule qui lui est présentée sur une artère du réseau pour permettre, le routage de la cellule sur une autre artère du réseau, la transmission du nombre et des états des micronoeuds voisins vers une unité d'un plan de gestion centralisé (1) de façon à tenir informé à tout instant l'unité de gestion de la configuration du réseau.

Applications : Réseaux locaux d'entreprises

## Description

La présente invention concerne un réseau de télécommunications d'extrémités pour la transmission de données par paquets.

Elle s'applique notamment à la réalisation de réseaux locaux de communications d'entreprises.

Les réseaux locaux sont naturellement destinés à mettre en communication aussi bien les utilisateurs sur le réseau téléphonique commuté que des stations microinformatiques entre elles ou avec des systèmes de traitements de données extérieurs par l'intermédiaire d'un serveur.

Un réseau de télécommunications d'extrémités est classiquement formé par un ensemble de noeuds de transmission reliés entre eux par des artères sur lesquelles circulent les informations du réseau transmises par des stations de transmission.

L'installation de réseaux locaux de petite taille à l'intérieur d'un même local par exemple n'offre pas de difficultés majeures. En revanche dès que le réseau concerne des ensembles plus vastes tel qu'un immeuble ou un ensemble d'immeubles des difficultés de tous ordres apparaissent notamment au niveau de la gestion de la configuration du réseau qui doit prendre en compte l'évolution de ces composantes et au niveau de l'exploitation et de la maintenance qui demandent de connaître à tout moment les éléments du réseau défaillants pour ne pas interrompre le routage des informations.

Ces contraintes conduisent à des réalisations rigides mal-adaptées à l'évolution des services, d'une part, et des terminaux, d'autre part, qui en définitive ne sont pas satisfaisantes pour les utilisateurs qui souhaitent pouvoir faire évoluer leur configuration bureautique en permanence afin de profiter des nouveaux avantages qu'offre l'évolution des technologies en espérant toujours pouvoir valoriser leurs investissements sur une durée économiquement acceptable.

Le but de l'invention est de pallier les inconvénients précités.

A cet effet, l'invention a pour objet un réseau de télécommunications d'extrémité pour la transmission de données par paquet du type comprenant un plan de transport composé de micronoeuds de commutation reliés entre eux par des artères, le plan de transport étant adapté pour permettre la communication et l'acheminement de paquets ou cellules de données entre équipements du réseau et avec d'autres équipements extérieurs au réseau caractérisé en ce que chaque micronoeud est commandé à partir d'instructions comprises dans chaque en-tête de cellule qui lui est présentée sur une artère du réseau pour permettre, le routage de la cellule sur une autre artère du réseau, la transmission du nombre et des états des micronoeuds voisins vers une unité d'un plan de gestion centralisé de façon à tenir informé à tout instant l'unité de gestion de la configuration du réseau.

Le réseau de télécommunications d'extrémités selon l'invention a pour principal avantage qu'il offre toujours une commutation adaptée à l'architecture de la transmission, quelque soit son évolution en nombre d'utilisateurs à servir grâce notamment à l'éclatement des fonctions de commutation et de l'intelligence à l'intérieur du réseau. Grâce à cette architecture les unités du plan de gestion peuvent connaître à tout moment la topologie du réseau et le surveiller efficacement. Un autre avantage résulte dans le pilotage et la surveillance de la fonction de commutation qui peut être ainsi réalisé au moyen d'un protocole de supervision entre la commande de chaque micronoeuds de commutation au moyen d'un jeu d'instructions de commutation très réduit qui donne une implémentation réaliste du logiciel. De ce fait, le coût du point de commutation élémentaire se trouve être réduit drastiquement par rapport aux commutateurs connus de l'art antérieur et n'intervient que dans une part marginale du budget d'ensemble de la fonction de transmission. Enfin, grâce au plan de gestion, la cohérence dans la collaboration des micronoeuds de commutation est facilement contrôlée.

D'autres caractéristiques et avantages de l'invention apparaîtront à l'aide de la description qui suit faite en regard des figures des dessins annexés qui représentent :
- La figure 1 un schéma fonctionnel d'un réseau de télécommunications d'extrémités selon l'invention.
- La figure 2 un mode de réalisation d'un noeud de distribution composant le réseau de la figure 1.
- La figure 3 la constitution d'une cellule d'informations transmises.

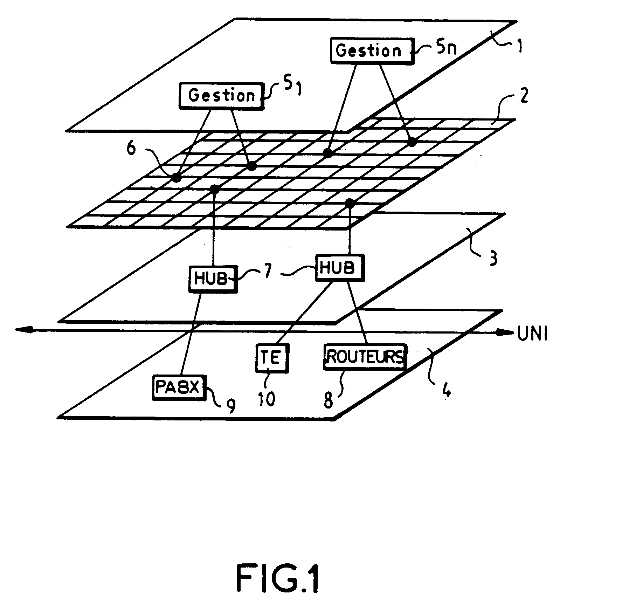

Le réseau de télécommunications qui est représenté à la figure 1 comporte une architecture composée schématiquement selon quatre plans fonctionnels, un plan de gestion 1, un plan de transport 2, un plan d'accès 3, et un plan d'équipement 4 desservi par le réseau.

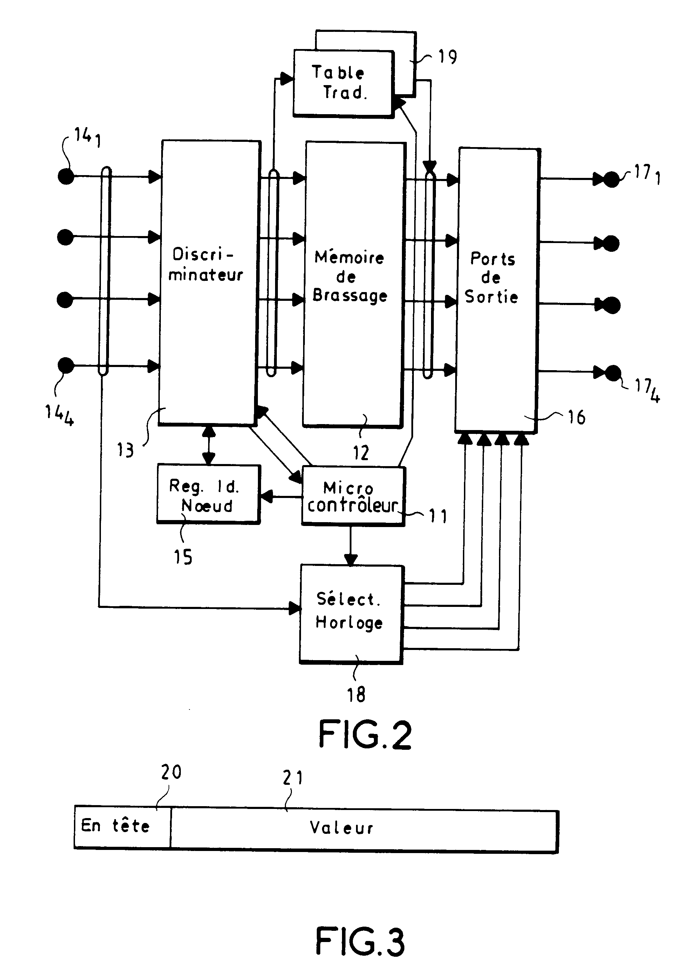

Le plan de gestion 1 est formé par un ensemble d'unités de traitement 5₁ à 5ₙ microprogrammées pour assurer le pilotage du plan de transport 2 et le maintien en condition opérationnelle de l'ensemble du réseau. Le plan de transport 2 est constitué d'un maillage de micronoeuds 6 où transitent les flux de données des usagers. Ces micronoeuds sont supervisés par les unités de traitement 5ⱼ du plan de gestion 1. Le plan d'accès 3 est formé par un ensemble de circuits d'interface 7 destinés à assurer de façon connue la connexion des équipements du plan 4 à certains noeuds 6 du plan de transport 2. Les équipements du plan 4 peuvent être composés d'équipements très différents constitués par exemple de routeurs 8 ou de multiplexeurs 9 adaptés pour l'acheminement de données ou d'informations vers d'autres réseaux du type commercialisé sous les marques de fabrique "TRANSPAC" ou "RNIS" ou encore pour le cheminement d'informations entre terminaux ou stations bureautiques mis à la disposition des usagers locaux. Chaque micronoeud 6 est structuré de la façon représentée à la figure 2 pour gérer deux plans d'adressage distincts des flux de données qui le traversent, celui des circuits virtuels qui tracent la route des services d'usagers et celui des micronoeuds qui permet au système de supervision de contrôler le réseau de micronoeuds répartis. Pour se faire chaque micronoeuds comporte, organisé autour d'un micro-contrôleur 11, une mémoire de commutation ou de brassage 12, adressée par un discriminateur 13 relié sur la figure 2 à quatre artères entrantes 14₁ à 14₄. Il comporte également un registre 15 d'identification du noeud, un ensemble ports de sortie 16 couplés entre les sorties de données de la mémoire de commutation 12 et un ensemble de quatre artères sortantes 17₁ à 17₄.

Un circuit de sélection d'horloge 18 sélectionne sous la commande du micro-contrôleur 11 les signaux d'horloge appliqués sur les artères entrantes 14₁ à 14₄ pour les appliquer sur les artères sortantes 17₁ à 17₄ par l'intermédiaire des ports de sortie 16. Une table traduction mémorisée dans une mémoire 19 coopère avec le microcontrôleur 11 au décodage des instructions fournies au micronoeud.

Cette architecture permet à chaque unité de traitement 5ⱼ du plan de gestion d'entretenir dans chaque noeud du réseau, un ensemble de connections virtuelles entre lui-même et chacun des noeuds ainsi qu'un arbre de remontée des comptes-rendus et alarmes provenant des noeuds, chaque micronoeud 6 pouvant gérer son voisinage grâce à une possibilité qui lui est offerte de donner un ordre à un de ses voisins topologiques et d'émettre un compte-rendu vers une des unités de traitement du plan de gestion 1.

Pour comprendre comment est effectué le transfert des données reçues sur les artères entrantes 14₁ à 14ₙ dans la mémoire de brassage 11 au travers du discriminateur 13 chaque cellule de données formant un paquet transmis dans le réseau est formée de la façon représentée à la figure 3 par un en-tête 20 et un zone de valeurs 21. Selon le type d'en-tête le discriminateur 13 entreprend soit un routage de la cellule sur l'artère de sortie indiquée par la zone 21 ou un routage de la cellule vers un autre micronoeud, ou encore exécute le contenu des informations contenues dans sa charge utile non représentée sur la figure 3. Ainsi suivant les instructions qui proviennent du discriminateur 13 le micro-contrôleur peut connecter ou déconnecter les circuits virtuels, apprendre à contrôler et tester des liens de connexion adjacents et constituer un arbre de distribution du rythme d'horloge sur chaque artère. Il peut également surveiller l'état des artères et s'initialiser de lui-même lorsque celui-ci se trouve isolé du plan de gestion. Ceci peut être le cas par exemple lorsque l'artère connectée devient indisponible plus d'un nombre déterminé de secondes provoquant dans le micronoeud une perte de son identité. Dans ce cas le micro-contrôleur est programmé pour désarmer le transfert des cellules entrantes vers les artères de sortie et forcer par une instruction des micro-contrôleurs et noeuds adjacents pour transmettre sur les artères d'identité des noeuds disponibles. L'ensemble des actions précédemment décrites peut être commandé suivant l'invention à l'aide par exemple du jeu d'instructions suivant
Marquer Trad Vc : < valeur VC >, < value >
Lire Trad VC : < valeur VC >
Marquer Trad-Noeud : < valeur Noeud > < valeur >
Lire Trad-Noeud : < valeur Noeud >
Echo : < valeur Payload >
Forward instruction : < artère > < reste payload >
Mark Id node : < valeur Id node >
Switch VP/VC : < valeur >
Connecter horloge liaison : < Id liaison sortante, Id liaison entrante>

Dans ce jeu d'instructions la partie soulignée correspond à l'intitulé dans l'instruction et la partie entre parenthèses est celle contenue dans la partie valeur de la cellule.

L'instruction marquée "Trad VC" a pour objet de marquer la table du traducteur VC.

L'instruction "lire Trad VC" permet de lire la table de traducteur VC,
l'instruction marquée "Trad-Noeud "permet de marquer dans le registre d'identité la valeur de l'identité du noeud,
l'instruction lire "Trad-Noeud" permet de lire l'identité du noeud,
l'instruction "écho" permet de renvoyer la cellule vers le centre de gestion,
l'instruction "forward instruction" permet de transmettre sur une artère désigner le reste de la charge utile de la cellule,
l'instruction "mark Id node" permet de mettre à jour le registre d'identité de la cellule à la valeur indiquée dans la zone valeur,
l'instruction "switch VPC" marque la position du champ à traduire dans la table de routage,
et l'instruction "connecter horloge de liaison" permet de commander le sélecteur d'horloge pour distribuer le rythme d'horloge d'entrée de la jonction sur l'horloge de sortie de la liaison. Naturellement pour l'exécution de ces instructions les adresses sont générées par le discriminateur 13 qui extrait les ordres de dérivées au micronoeud et par le micro-contrôleur 11 qui est chargé d'exécuter le jeu de micro-instructions réduit, d'acquitter le compte-rendu et de générer les alarmes spontanées.

## Revendications

1. Réseau de télécommunications d'extrémité pour la transmission de données par paquet du type comprenant un plan de transport (2) composé de micronoeuds de commutation (6) reliés entre eux par des artères, le plan de transport (2) étant adapté pour permettre la communication et l'acheminement de paquets ou cellules de données entre équipements (4) du réseau et avec d'autres équipements extérieurs au réseau caractérisé en ce que chaque micronoeud (6) est commandé à partir d'instructions comprises dans chaque en-tête de cellule qui lui est présentée sur une artère du réseau pour permettre, le routage de la cellule sur une autre artère du réseau, la transmission du nombre et des états des micronoeuds voisins vers une unité d'un plan de gestion centralisé de façon à tenir informé à tout instant l'unité de gestion de la configuration du réseau.

2. Réseau selon la revendication 1 caractérisé en ce que chaque micronoeud comprend un microcontrôleur (11 ) couplé à :
- une mémoire de brassage (12) adressée par un discriminateur (13),
- un registre d'identification (15)
- et à un ensemble de ports d'entrée et de sortie (16).

3. Réseau selon la revendication 2 caractérisé en ce que chaque micronoeud comporte un circuit de sélection d'horloge (18) pour appliquer un signal d'horloge sur chaque artère de sortie et d'entrée du micronoeud.
